# EUROPEAN PATENT SPECIFICATION

(11) **EP 1 857 220 B1**
(45) Date of publication and mention of the grant of the patent: **15.04.2009**
(21) Application number: 06090078.4
(22) Date of filing: 15.05.2006
(51) Int. Cl.: B23Q 11/00, F16F 15/00, F16F 1/32

(54) **Arrangement for active vibration damping**
Einrichtung zur aktiven Schwingungsdämpfung
Dispositif pour l'amortissement actif des vibrations

(43) Date of publication of application: 21.11.2007
(73) Proprietor: Fraunhofer-Gesellschaft zur Förderung der angewandten Forschung e.V., 80686 München (DE); Ce.S.I. Centro Studi Industriali Research & Development - Advanced Engineering and Simulation, 20093 Cologno Monzese, MI (IT)
(72) Inventor: Brunner, Bernhard, 97209 Veitshöchheim (DE); Stöhr, Thomas, 97318 Kitzingen (DE); Olsowski, Klaus, 97209 Veitshöchheim (DE); Merlo, Angelo, 28100 Novara (IT); Ricciardi, Donato, 20099 Sesto San Giovanni (IT)
(74) Representative: Pfenning, Meinig & Partner GbR

(56) References cited:
- DE-A1- 10 217 288
- US-A- 5 390 949
- PATENT ABSTRACTS OF JAPAN vol. 2003, no. 12, 5 December 2003 (2003-12-05) & JP 2004 248803 A (MATSUSHITA ELECTRIC IND CO LTD), 9 September 2004 (2004-09-09)

## Description

The invention relates to an arrangement for active vibration damping, a machine tool, comprising an arrangement for active vibration damping, and a measuring device.

Machine tools, like milling cutter machines or drilling machines, are well known. Such machines comprise in general a main body with a platform on which the workpiece is to be mounted, a tool head carrying the drill, the cutter or others tools, and a motor driving the tools, the head, the platform etc.

Because of the motors used in such a machine, vibrations are generated. Such vibrations lead to vibrations of the tool and/or the workpiece, generating unwanted effects in the workpiece and limiting the accuracy of the process.

In DE 102 17 288 A1 a cutting head is disclosed which comprises an arrangement for active vibration damping. The latter arrangement includes at least one active displacement element, a first and second member being displaced against each other by the displacement element and a controlling unit. The active displacement element comprises an actuator being realized as piezo-stack. Further a measuring device for measuring vibrations is disclosed.

Therefore, the object of the invention is to create an arrangement for vibration damping, especially an arrangement, which can be used in said machine tools, which is capable to reduce the effects of vibration. Another object of the invention is to create a machine tool with vibration damping and a measuring device for measuring vibrations.

These objects of the invention are fulfilled by an arrangement having the characteristics at least of claim 1 and a machine tool having the characteristics of claim 15.

According to claim 1 the arrangement for active vibration damping comprises at least one active displacement element, a first and a second member, being displaceable against each other by the displacement element, and a controlling unit, said displacement element comprising an actuator and a measuring device, the measuring device comprising a spring member, being designed as a mechanical carrier, and a strain sensor, being directly mounted on the spring member, said spring member being elastically arranged between the first and the second member for measuring a vibration between the first and the second member, and said controlling unit being coupled to the strain sensor and to the displacement element for detecting the signals of the sensor and operating the actuator according to the sensor signals.

Vibrations between the first and the second member will cause the spring member of the measuring device, being directly or indirectly arranged between said two members and, due to its elasticity, able to stay always in contact with the vibrating parts without being decoupled, to bend and to relax in alternation.

The changing strain of the spring member can be sensed by the strain sensor being mounted on the spring member.

The signals detected by the strain sensor can be evaluated in a controlling unit.

Based on these signals, the actuators of the displacement element can be activated to damp the vibration.

The spring member is designed as a mechanical carrier: On the one hand, the spring member is a suitable carrier for the strain sensor, on the other hand, the spring member protects the sensor from mechanical load.

The strain sensor may be mounted directly on the surface of the spring member. It is also possible to mount the strain sensor by fully or partially embedding it into the spring member.

In respect to the simplicity of the measuring device a strain sensor directly mounted on the surface of the spring member is preferred, allowing a symmetrical design of the spring member with even mechanical properties.

Preferred embodiments of the invention are given in the dependent claims.

In a preferred embodiment the measuring device and/or the displacement element is designed to be non resonant in the relevant frequency range of the active vibration damping.

A non resonant behaviour of the measuring device and preferably of the whole displacement element allows a defined correlation between the amplitude of the vibration to be sensed and the signals detected by the strain sensor.

For assuring a non resonant behaviour in the relevant range of the vibration damping, the shape, the weight and the mechanical properties of the materials of the elements of the displacement element have to be taken into account and chosen accordingly. FEM-analysis of the elements, especially of the spring, can help to create a setup with a non resonant behaviour.

In a preferred embodiment the spring member is formed as a curved flat plate.

Preferably the strain sensor is arranged in that area of the spring where the changing of the strain, i.e., the strain level, during vibration of the spring is at its maximum, giving a high signal, improving the accuracy of the measuring device.

By curving the plate the strain level of the spring member will be increased, thus increasing the precision of the strain sensor mounted on the curved spring member.

Preferably the height of the flat plate due to the curvature is bigger than the amplitude of the vibrations to be sensed.

Increasing the curvature of the spring member will increase the sensitivity of the strain sensor. However, to not have only a negligible effect above condition must be fulfilled.

In a preferred embodiment the spring member is formed as a flat disc, preferably as a curved flat disc. The disc can be, depended on the application, holohedral or punched.

In principal, other forms like a rectangular, a square, a round or a triangular form are possible.

In a preferred embodiment the material of the spring element is plastic, preferably a reinforced plastic, for example, a glass fibre reinforced or carbon fibre reinforced plastic, or metal, preferably steel, mostly preferred spring steel.

In a preferred embodiment the strain sensor is a piezoelectric element, especially a piezoelectric thin film, a piezo-resistive element, a strain gauge, or an optical sensor, especially an optical fibre.

These kinds of strains sensors can be mounted as a whole on the spring member, without needing additional parts to be mounted in the periphery of the spring. With such sensors, the measuring device is a fully functional, independent unit.

Preferably in case of strain gauges or special piezoelectric sensors with temperature compensating electronic elements or devices or cross correlation of several piezoelectric elements the spring member is temperature compensated, for example by quarter-, half- or full bridges.

In principle also inductive and capacitive sensors may be used.

In a preferred embodiment the piezoelectric thin film is directly joined, especially without glue, with the metallic spring member.

In this embodiment the metallic spring can be used as one electrode.

One preferred possibility for joining the piezoelectric thin film directly with the metallic spring member is depositing the piezoelectric material directly onto the surface of the metallic spring member.

Methods for creating a piezoelectric film directly on the surface of a metallic spring member are also described, for example, in DE 197 44 630 C1 and the documents cited in the specification of said patent.

According to this embodiment the strain of the spring, because no intermediate layers do exist, is directly coupled into the piezoelectric film, increasing the stability and accuracy of the measuring device.

Thin measuring devices are possible with the piezoelectric thin film being directly joined to the surface of the spring member, making such measuring devices preferred in conditions with less space.

In a preferred embodiment the measuring device is mounted between the actuator and the first or the second member.

In a preferred embodiment the actuator and measuring device are being geometrical arranged in series in direction of the force with the same orientation of their main axis.

Both embodiments are advantageous compact setups of the displacement element.

If the measuring device is aligned with the actuator (the main axis of the actuator being the direction of displacement), in addition to a compact and mechanically stable setup a high sensitivity of the measuring device is possible, especially if a measuring device with a flat disc spring as spring carrier is used.

In a preferred embodiment the actuator comprises a piezo-stack.

In a preferred embodiment the piezo-stack is preloaded with a spring, the spring being the measuring device.

According to this embodiment the measuring device has two functions: First, to measure vibrations, second, to preload the piezo-stack.

Due to this combination of several functions in one element, an extremely compact setup is possible.

In a preferred embodiment the displacement element comprises a twistable and shearable element, being twistable and shearable compared to the piezo stack, and being arranged between the actuator and the first member or the second member.

The twistable and shearable element prevent damage to the piezo stack caused by a torque and shear forces, which may arise while using the arrangement for active vibration damping in an application.

In a preferred embodiment the twistable and shearable element is constructed as a long, thin walled member orientated in direction of the axis of the piezo-stack, having gaps, preferably long, thin gaps, being also oriented in direction of the axis of the piezo-stack.

The long and thin-walled form of the twistable element, supported by the gaps, allows the twisting of the twistable and shearable element around the axis and the shearing perpendicular to the axis of symmetry of the piezo-stack.

Because of the orientation of the gaps a high rigidity in direction of the axis is preserved. A high rigidity in direction of the axis is needed to transfer a shift of the actuator to the first and the second member.

In a preferred embodiment the arrangement comprises at least three, preferably exactly three, displacement elements.

With three displacement elements, being such arranged that they span a plane and that the shifting direction of each actuator has a part which is normal to the plane, vibration damping with three degrees of freedom is possible. This is sufficient for most applications.

According to claim 15, the tool machine, especially a milling cutter machine or a drilling machine, comprises an arrangement for active vibration damping as presented above.

In the following embodiments according to the invention will be described, partially displayed by drawings.
- Fig. 1: displays the displacement element of an embodiment of the arrangement for active vibration damping according to the invention in a disassembled state,
- Fig. 2: displays a cross section of said embodiment of the arrangement,
- Fig. 3: displays the measuring device used in said embodiment,
- Fig. 4: displays an application of a measuring device according to the invention as displacement/force sensor in fixations.

According to a preferred embodiment of the invention, the arrangement for active vibration damping comprises three active displacement elements 2, a first and second member, being displaceable against each other by the displacement elements 2, and a controlling unit.

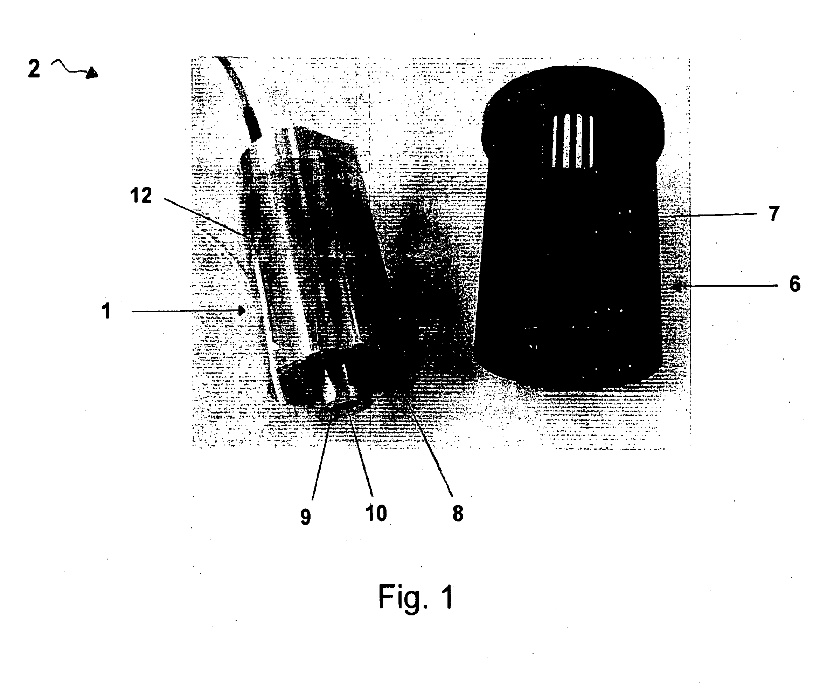

Each displacement element 2 comprises an actuator 1, a measuring device 3 and a twistable and shearable element 6, as displayed in the figures 1, 2 and 3.

The actuator 1 in this embodiment has a cylindrical shape. In principal also other shapes are possible. Inside its metal housing 8 the actuator comprises a stack build up by several piezoelectric layers, preloaded with a spring. A piezo tip 9 sticks out of the front wall of the cylindrical housing. Applying a voltage to the piezo stack, the piezo tip 9 can be shifted against the housing along an axis A defined by the piezo stack.

The piezo tip comprises a screw thread 10 for mounting the twistable element 7.

On its rear wall, the actuator comprises another screw thread 11 for mounting the first member (not shown).

In addition, a temperature sensor 12 is fixed to the actuator housing 8, allowing to take into account temperature variations for the active vibration damping.

The twistable and shearable element 6 is constructed as a long, thin walled cylindrical member orientated in direction of the axis A of the piezo-stack. It has long, thin gaps 7, being also oriented in direction of the axis A, and being distributed over the whole periphery of the cylindrical member.

On one end, the twistable and shearable element 6 comprises several screw threads 13 for mounting the second member (not shown). On the opposite end, the twistable and shearable element 6 comprises a hole in the center of its front wall for mounting the actuator 1.

The twistable and shearable element 6, although extremely rigid in direction of the shifting axis A, is twistable and shearable compared to the piezo-stack, preventing, being arranged between the actuator 1 and the second member, damage to the piezo-stack due to torque or shear forces exerted on the displacement element 2.

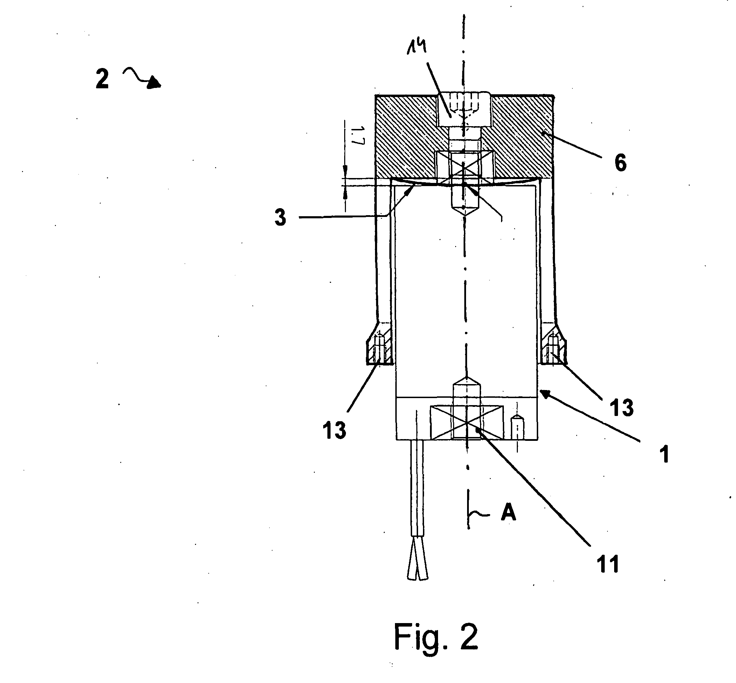

Figure 2 shows the displacement element 2 in an assembled state.

The actuator 1 is mounted inside the cylindrical member of the twistable and shearable element 6, yielding to an advantageous compact setup of the displacement element.

The measuring device 3 is mounted in a gap between the front wall of the actuator and the backside of the front wall of the twistable and shearable element 6, being orientated along the axis A and thus being in series with the actuator and in direction of the force.

The measuring device 3 is arranged outside the metal housing 8 of the actuator. In this position the measuring device 3 is not being affected by heat being generated by the actuator (in contrast, for example, to a strain gauge directly mounted on the piezo stack). Furthermore, in this position the measuring device 3 is electrically isolated from the high voltages being generated while operating the actuator.

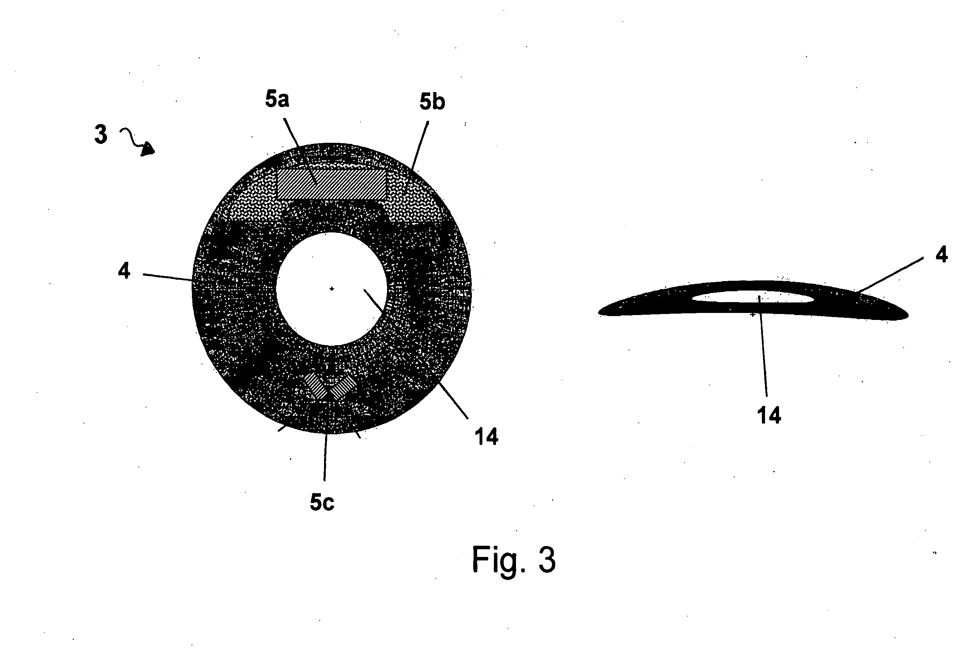

Figure 3 displays the measuring device in detail.

The measuring device 3 comprises a spring member 4 and a strain sensor 5, being mounted on the spring member 4.

The spring member 4 is formed as a curved flat disc with a hole 14 in its center. The diameter of the hole 14 is chosen according to the diameter of the piezo tip 9, allowing a mechanical stable bearing of the measuring device 3 when assembled.

The thickness of the disc in this preferred embodiment is about 0.4 mm to 0.8 mm, the diameter about 40 mm to 60 mm. Due to the curvature the curved disc spring 4 has a height about 1 mm to 2 mm. The material of the spring member in this preferred embodiment is stainless steel, especially spring steel. However, other materials, also plastics, can be used as material for the spring member.

Different strain sensors 5, a piezoelectric element in a first embodiment 5a and a second embodiment 5b and a strain gauge 5c, are directly mounted on the surface of the disc spring 4 in the area of maximum curvature. In this embodiment, the piezoelectric element 5a, 5b is a piezoelectric thin film directly applied on the surface of the disc spring 4.

The gap between the front wall of the actuator 1 and the backside of the front wall of the twistable element 6 for mounting the measuring device and the height of the measuring device are designed to allow an elastic arrangement of the measuring device with a small preload, and a sufficient curvature of the spring disc 4 for having a sufficient accuracy of the strain sensor 5.

Strain sensor 5 and actuator 1 are coupled to the controlling unit (not shown). Detecting and evaluating the signals of the strain sensor 5, the controlling unit operates the actuator based on these signal, for example, in a closed loop control.

In a second preferred embodiment, instead of preloading the piezo stack with a common spring, a measuring device according to the invention is used.

A preferred application of the arrangements for vibration damping described above is, for example, the vibration damping of a tool machine, for example, a milling cutter machine or a drilling machine.

Therefore, the said arrangement is mounted between the head carrying the tool and the base of the machine carrying the workpiece.

The arrangement comprises three displacement elements, arranged and orientated in a plane with normal shifting axis.

In this embodiment the tool machine generates vibrations in the range from 0 to 1000 Hz with amplitudes in the order of microns.

Accordingly, the actuators 1 are chosen to have shifting length at least in this range, and the disc springs 4 are chosen with a height much bigger than the vibration amplitudes. In addition, the displacement elements 2 are designed to have no resonances in the range from 0 to 1000 Hz.

The measuring device according to the invention can be used in various applications.

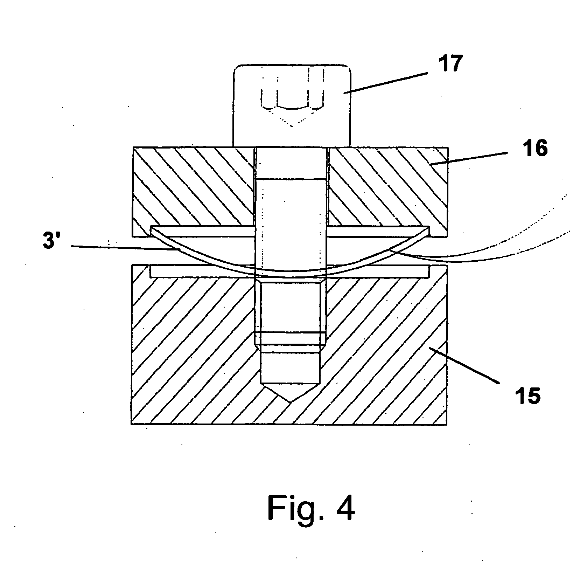

As another example, Figure 4 displays an application of a measuring device 3' according to the invention as displacement/force sensor in a fixation.

The measuring device 3', comprising a spring member formed as a curved disc spring, and a strain sensor mounted on the disc spring, is elastically arranged between a first member 15 and a second member 16. These two members are fixed by a screw 17, mounted through a hole in the second member 16, through a hole in the disc spring and inserted in a screw thread in the first member 15.

By applying a torque on the screw the two members change their distance. Accordingly, the disc spring changes its shape, which will be detected by the strain sensor mounted on the disc spring.

## Claims

1. Arrangement for active vibration damping, comprising at least one active displacement element (2), a first and a second member, being displaceable against each other by the displacement element, and a controlling unit, said displacement element comprising an actuator (1) and a measuring device (3), the measuring device comprising a spring member (4), being designed as a mechanical carrier, and a strain sensor (5), being mounted on the spring member, said spring member being elastically arranged between the first and the second member for measuring a vibration between the first and the second member, and said controlling unit being coupled to the strain sensor (5) and to the displacement element for detecting the signals of the sensor (5) and operating the actuator (1) according to the sensor signals.

2. Arrangement according to claim 1, **characterized in that** the measuring device (3) and/or the displacement element is designed to be non resonant in the relevant frequency range of the active vibration damping.

3. Arrangement according to any preceding claim, **characterized in that** the spring member (4) is formed as a curved flat plate.

4. Arrangement according to any preceding claim, **characterized in that** the spring member (4) is formed as a flat disc.

5. Arrangement according to any preceding claim, **characterized in that** the material of the spring member (4) is plastic, preferably a reinforced plastic, or metal, preferably steel, mostly preferred spring steel.

6. Arrangement according to any preceding claim, **characterized in that** the strain sensor (5) is a piezoelectric element (5a, 5b), especially a piezoelectric thin film, a piezo-resistive element, a strain gauge (5c), or an optical sensor, especially an optical fibre.

7. Arrangement according to claim 5 and claim 6, **characterized in that** the piezoelectric thin film (5a, 5b) is directly joined, especially without glue, with the spring member (4).

8. Arrangement according to any preceding claim, **characterized in that** the measuring device (3) is mounted between the actuator (1) and the first or the second member.

9. Arrangement according to claim 8, **characterized in that** actuator (1) and measuring device (3) are being geometrical arranged in series in direction of the force with the same orientation of their main axis.

10. Arrangement according to any preceding claim, **characterized in that** the actuator (1) comprises a piezo-stack.

11. Arrangement according to claim 10, **characterized in that** the piezo-stack is preloaded with a spring, the spring being the measuring device.

12. Arrangement according to claim 10 or 11, **characterized in that** the displacement element (2) comprises a twistable and shearable element (6), being twistable and shearable compared to the piezo stack, and being arranged between the actuator (1) and the first member or the second member.

13. Arrangement according to claim 12, **characterized in that** the twistable and shearable element (6) is constructed as a long, thin walled member orientated in direction of the axis (A) of the piezo-stack, having gaps (7), preferably long, thin gaps, being also oriented in direction of the axis (A) of the piezo-stack.

14. Arrangement according to any preceding claim, **characterized in that** the arrangement comprises at least three, preferably exactly three, displacement elements (2).

15. Tool machine, especially milling cutter machine or drilling machine, comprising an arrangement for active vibration damping according to any claim 1 to 14.

## Patentansprüche

1. Anordnung zur aktiven Schwingungsdämpfung, mindestens ein aktives Verschiebungselement (2), ein erstes und ein zweites Element, die gegeneinander durch das Verschiebungselement verschiebbar sind, und eine Steuereinheit umfassend, wobei das Verschiebungselement einen Aktor (1) und eine Messvorrichtung (3) einschließt und die Messvorrichtung ein Federelement (4), das als mechanischer Träger ausgelegt ist, und einen Lastsensor (5), der auf dem Federelement befestigt ist, aufweist, wobei das Federelement elastisch zwischen dem ersten und dem zweiten Element zur Messung einer Schwingung zwischen dem ersten und dem zweiten Element angeordnet ist und die Steuereinheit mit dem Lastsensor (5) und dem Verschiebungselement zum Detektieren der Signale des Sensors (5) und zum Betätigen des Aktors (1) gemäß den Sensorsignalen gekoppelt ist.

2. Anordnung nach Anspruch 1, **dadurch gekennzeichnet, dass** die Messvorrichtung (3) und/oder das Verschiebungselement ausgebildet sind, in dem relevanten Frequenzbereich der aktiven Schwingungsdämpfung nicht in Resonanz zu gehen.

3. Anordnung nach einem der vorhergehenden Ansprüche, **dadurch gekennzeichnet, dass** das Federelement (4) aus einer gekrümmten flachen Platte gebildet ist.

4. Anordnung nach einem der vorhergehenden Ansprüche, **dadurch gekennzeichnet, dass** das Federelement (4) aus einer flachen Scheibe gebildet ist.

5. Anordnung nach einem der vorhergehenden Ansprüche, **dadurch gekennzeichnet, dass** das Material des Federelements (4) Kunststoff, vorzugsweise ein verstärkter Kunststoff, oder Metall, vorzugsweise Stahl, noch bevorzugter Federstahl ist.

6. Anordnung nach einem der vorhergehenden Ansprüche, **dadurch gekennzeichnet, dass** der Lastsensor (5) ein piezoelektrisches Element (5a, 5b), insbesondere ein piezoelektrischer Dünnfilm, ein piezoresistives Element, ein Dehnungsmessstreifen (5c) oder ein optischer Sensor, insbesondere eine optische Faser ist.

7. Anordnung nach Anspruch 5 oder Anspruch 6, **dadurch gekennzeichnet, dass** der piezoelektrische Dünnfilm (5a, 5b) direkt mit dem Federelement (4) verbunden ist, insbesondere ohne Klebstoff.

8. Anordnung nach einem der vorhergehenden Ansprüche, **dadurch gekennzeichnet, dass** die Messvorrichtung (3) zwischen dem Aktor (1) und dem ersten oder dem zweiten Element angeordnet ist.

9. Anordnung nach Anspruch 8, **dadurch gekennzeichnet, dass** der Aktor (1) und die Messvorrichtung (3) geometrisch in Reihe in Richtung der Kraft mit der gleichen Orientierung ihrer Hauptachsen angeordnet sind.

10. Anordnung nach einem der vorhergehenden Ansprüche, **dadurch gekennzeichnet, dass** der Aktor (1) ein Piezostapel umfasst.

11. Anordnung nach Anspruch 10, **dadurch gekennzeichnet, dass** der Piezostapel durch eine Feder vorgespannt ist, wobei die Feder die Messvorrichtung ist.

12. Anordnung nach Anspruch 10 oder Anspruch 11, **dadurch gekennzeichnet, dass** das Verschiebungselement (2) ein Torsions- und Scherungselement (6) einschließt, das im Vergleich zu dem Piezostapel eine Torsion und eine Scherung ermöglicht, und das zwischen dem Aktor (1) und dem ersten oder dem zweiten Element angeordnet ist.

13. Anordnung nach Anspruch 12, **dadurch gekennzeichnet, dass** das Torsions- und Scherungselement (6) als langes Element mit dünner Wand hergestellt ist, das in Richtung der Achse (A) des Piezostapels ausgerichtet ist und Ausnehmungen (7), vorzugsweise lange, dünne Ausnehmungen aufweist, die ebenfalls in Richtung der Achse (A) des Piezostapels ausgerichtet sind.

14. Anordnung nach einem der vorhergehenden Ansprüche, **dadurch gekennzeichnet, dass** die Anordnung mindestens drei, vorzugsweise genau drei Verschiebungselement (2) umfasst.

15. Werkzeugmaschine, insbesondere Fräsmaschine oder Bohrmaschine, eine Anordnung zur aktiven Schwingungsdämpfung nach einem der Ansprüche 1 bis 14 umfassend.

## Revendications

1. Agencement pour un amortissement actif des vibrations, comprenant au moins un élément de déplacement actif (2), un premier et un deuxième élément, déplaçables l'un contre l'autre par l'élément de déplacement, et une unité de commande, ledit élément de déplacement comprenant un actionneur (1) et un dispositif de mesure (3), le dispositif de mesure comprenant un élément de ressort (4), conçu en tant qu'un transporteur mécanique, et un capteur de contrainte (5), monté sur l'élément de ressort, ledit élément de ressort étant agencé élastiquement entre le premier et le deuxième élément pour mesurer une vibration entre le premier et le deuxième élément, et ladite unité de commande étant couplée au capteur de contrainte (5) et à l'élément de déplacement pour détecter les signaux du capteur (5) et pour actionner l'actionneur (1) selon les signaux de capteur.

2. Agencement selon la revendication 1, **caractérisé en ce que** le dispositif de mesure (3) et/ou l'élément de déplacement est conçu de manière à être non résonnant dans la gamme de fréquences correspondante de l'amortissement actif des vibrations.

3. Agencement selon l'une quelconque des revendications précédentes, **caractérisé en ce que** l'élément de ressort (4) est sous la forme d'une plaque plate courbée.

4. Agencement selon l'une quelconque des revendications précédentes, **caractérisé en ce que** l'élément de ressort (4) est sous la forme d'un disque plat.

5. Agencement selon l'une quelconque des revendications précédentes, **caractérisé en ce que** le matériau de l'élément de ressort (4) est du plastique, de préférence du plastique renforcé, ou du métal, de préférence de l'acier, de manière la plus préférée de l'acier à ressorts.

6. Agencement selon l'une quelconque des revendications précédentes, **caractérisé en ce que** le capteur de contrainte (5) est un élément piézoélectrique (5a, 5b), en particulier un film mince piézoélectrique, un élément piézorésistif, une jauge de contrainte (5c), ou un capteur optique, en particulier une fibre optique.

7. Agencement selon la revendication 5 et la revendication 6, **caractérisé en ce que** le film mince piézoélectrique (5a, 5b) est collé directement, en particulier sans colle, à l'élément de ressort (4).

8. Agencement selon l'une quelconque des revendications précédentes, **caractérisé en ce que** le dispositif de mesure (3) est monté entre l'actionneur (1) et le premier ou le deuxième élément.

9. Agencement selon la revendication 8, **caractérisé en ce que** l'actionneur (1) et le dispositif de mesure (3) sont agencés géométriquement en série dans la direction de la force avec la même orientation de leur axe principal.

10. Agencement selon l'une quelconque des revendications précédentes, **caractérisé en ce que** l'actionneur (1) comprend une piézo-pile.

11. Agencement selon la revendication 10, **caractérisé en ce que** la piézo-pile est préchargée avec un ressort, le ressort étant le dispositif de mesure.

12. Agencement selon la revendication 10 ou 11, **caractérisé en ce que** l'élément de déplacement (2) comprend un élément de torsion et de cisaillement (6), capable de torsion et de cisaillement par rapport à la piézo-pile, et qui est agencé entre l'actionneur (1) et le premier élément ou le deuxième élément.

13. Agencement selon la revendication 12, **caractérisé en ce que** l'élément de torsion et de cisaillement (6) est construit sous la forme d'un élément long à paroi mince orienté dans la direction de l'axe (A) de la piézo-pile, ayant des espaces (7), de préférence de longs espaces minces également orientés dans la direction de l'axe (A) de la piézo-pile.

14. Agencement selon l'une quelconque des revendications précédentes, **caractérisé en ce que** l'agencement comprend au moins trois, de préférence exactement trois, éléments de déplacement (2).

15. Machine-outil, en particulier une fraise ou une perceuse, comprenant un agencement pour un amortissement actif des vibrations selon l'une quelconque des revendications 1 à 14.
